**Europäisches Patentamt**

**European Patent Office**

**Office européen des brevets**

(19)

(11) Veröffentlichungsnummer : **0 226 983 B2**

(12) ## NEUE EUROPÄISCHE PATENTSCHRIFT

(45) Veröffentlichungstag der neuen Patentschrift :
01.04.92 Patentblatt 92/14

(51) Int. Cl.$^5$ : **B01D 53/36,** B01J 29/02

(21) Anmeldenummer : **86117373.0**

(22) Anmeldetag : **13.12.86**

(54) **Eisenhaltiger Katalysator zur Verringerung des Stickoxidgehalts von Verbrennungsabgasen.**

(30) Priorität : **16.12.85 DE 3544476**

(43) Veröffentlichungstag der Anmeldung :
**01.07.87 Patentblatt 87/27**

(45) Bekanntmachung des Hinweises auf die
Patenterteilung :
**23.08.89 Patentblatt 89/34**

(45) Bekanntmachung des Hinweises auf die
Entscheidung über den Einspruch :
**01.04.92 Patentblatt 92/14**

(84) Benannte Vertragsstaaten :
**AT BE DE LU NL SE**

(56) Entgegenhaltungen :
**DE-A- 2 748 471**
**DE-C- 1 084 248**
**FR-A- 2 295 793**
**Ind. Eng. Chem. Prod. Res. Dev. (1980), S.**
**218-225**
**Römpp, 7. Auflage (1974), S. 2217**

(73) Patentinhaber : **SÜD-CHEMIE AG**
**Lenbachplatz 6**
**W-8000 München 2 (DE)**

(72) Erfinder : **Schneider, Michael, Dr.**
**Waldparkstrasse 54a**
**W-8012 Ottobrunn-Riemerling (DE)**
Erfinder : **Kochloefl, Karel, Dr.**
**Justus-von-Liebig-Strasse 3**
**W-8206 Bruckmühl/Heufeld (DE)**
Erfinder : **Maletz, Gerd, Dr.**
**Innere Regensburger Strasse 9**
**W-8300 Landshut (DE)**
Erfinder : **Wernicke, Hans, Jürgen, Dr.**
**Böhmmerwaldstrasse 37g**
**W-8192 Geretsried (DE)**

(74) Vertreter : **Reitzner, Bruno, Dr. et al**
**Patentanwälte Dipl.-Ing. R. Splanemann Dr. B.**
**Reitzner Tal 13**
**W-8000 München 2 (DE)**

EP 0 226 983 B2

## Beschreibung

Die Erfindung betrifft die Verwendung eines eisenhaltigen Katalysators zur Verringerung des Stickoxidgehalts von Abgasen, insbesondere von Verbrennungsabgasen.

Bei der Verbrennung fossiler Brennstoffe werden sowohl aus stickstoffhaltigen Komponenten als auch aus dem Luftstickstoff Stickoxide ($NO_x$) gebildet, welche in die Atmosphäre gelangen und eine ernste Umweltbeeinträchtigung darstellen. Man betrachtet die Stickoxide als mitverantwortlich für die Waldschädigung durch "sauren Regen" und führt insbesondere die Bildung des "photochemischen Smogs" auf diese zurück.

Angesichts der während der letzten Jahre ständig gestiegenen $NO_x$-Emissionen besteht ein großes Interesse daran, den $NO_x$-Gehalt von Verbrennungsabgasen zu reduzieren.

Es ist bekannt, daß Stickoxide durch $NH_3$ in $N_2$ und $H_2O$ überführt werden können und daß diese Reaktion in einem weiten Temperaturbereich ziemlich selektiv ist, d.h. in Gegenwart eines hohen Sauerstoffüberschusses (wie er in Verbrennungsabgasen gewöhnlich vorhanden ist) ohne allzu hohe $NH_3$-Verluste infolge Oxidation abläuft, so daß nur relativ geringe Mengen an Reduktionsmittel erforderlich sind. Es sind weiterhin bereits verschiedene Katalysatoren für die $NO_x$-Reduktion mittels Ammoniak bekannt.

Bei den katalytisch aktiven Komponenten dieser bekannten $NO_x$-Reduktionskatalysatoren handelt es sich vorwiegend um toxische Schwermetallverbindungen. Die DE-PS 24 58 888 beschreibt z.B. die Kombination von $TiO_2$ mit Oxiden der Metalle Vanadin, Molybdän, Wolfram, Nickel, Kobalt, Uran etc. Da die Wirksamkeit der Entstickungskatalysatoren unter den für diese Anwendung typischen Betriebsbedingungen mit zunehmender Gebrauchsdauer stetig abnimmt, müssen diese - etwa nach 2 bis 5 Jahren - ersetzt werden. Es ist abzusehen, daß die unbrauchbar gewordenen Katalysatoren, welche große Mengen an giftigen Bestandteilen enthalten, nun in aufwendiger Weise regeneriert oder aber unter Beachtung strenger Vorschriften deponiert werden müssen. In Anbetracht der etwa für die Rauchgasentstickung von Kraftwerken erforderlichen großen Katalysatormengen ist die Gefahr einer sekundären Umweltschädigung offensichtlich.

Es ist weiterhin die Verwendung von Molekularsieben zur Katalyse der $NO_x$-Reduktion mittels $NH_3$ bekannt. Beispielsweise wird nach der DE-OS 30 00 383 als Katalysator ein Clinoptilolith in der Wasserstofform verwendet, der durch Ionenaustausch eines natürlich vorkommenden Clinoptiloliths mit einer Ammoniumnitratlösung und anschließendem Waschen mit einer starken Säure erhalten worden ist.

In der DE-OS 33 28 653 ist ein Katalysator beschrieben, der aus einem keramischen Molekularsieb besteht, dessen Durchlaß-Querschnittsdurchmesser in einer Größenordnung unterhalb des kritischen Moleküldurchmessers von Ammoniak bis oberhalb des kritischen Moleküldurchmessers von Stickstoff liegen.

Die katalytische Aktivität dieser Molekularsiebkatalysatoren ist also durch bestimmte Porenstrukturen bedingt. Bei diesen Katalysatoren besteht die Gefahr, daß bei hohen Reaktionstemperaturen unter der Einwirkung des in Verbrennungsabgasen in hoher Konzentration enthaltenen Wasserdampfes die Kristallstruktur beeinträchtigt wird, während bei tiefen Temperaturen die bereitwillige Absorption des Wasserdampfes zur Verminderung der Aktivität führt. Als schwerwiegender Nachteil erscheint vor allem, daß bei Verwendung von Molekularsieben, wie H-Mordenit und H-Clinoptilolith, nicht erwünschtes $N_2O$ in beträchtlicher Konzentration gebildet wird, wie z.B. aus der Arbeit von J.R. Kiovsky, P.B. Koradla und C.T. Lin in Ind. Eng. Chem. Prod. Res. Dev. (1980) 218, bekannt ist.

Ein ähnlicher Reduktionskatalysator zur Entfernung von Stickoxiden aus Abgasen ist aus der DE-AS 24 46 006 bekannt. Dieser Katalysator besteht aus einem 1 bis 10% Alkali- bzw. Erdalkalioxid-enthaltenden Aluminiumsilicat-Hydrat, d.h. aus einem synthetischen Zeolith, als Trägersubstanz, und einem Salz, Oxid oder Hydroxid des Eisens als katalytischem Bestandteil. Die Schwefelbeständigkeit des Katalysators ist aufgrund seines hohen Alkali- bzw. Erdalkaligehalts gering.

Aus der DE-PS 26 21 944 ist die Verwendung von Eisenoxid als Katalysator zur $NO_x$-Reduktion bekannt, wobei Eisenerz mit einer Korngröße von 3 bis 35 mm verwendet wird. Der verbrauchte Katalysator wird laufend entfernt und in einem Hochofen als Rohmaterial zu Eisenherstellung übergeführt. Dieser Katalysator ist nicht für den Einsatz in Festbettreaktoren geeignet, da er im Betrieb einen nicht akzeptablen hohen Druckverlust verursacht.

Die DE-PS 24 60 681 beschreibt ebenfalls einen Eisenoxid-Reduktionskatalysator, der durch magnetische Abscheidung aus Hochofenstaub, Sinteranlagenstaub usw. erhältlich ist. Die relativ kurze Lebensdauer erweist sich als äußerst nachteilig, wenn man bedenkt, daß das Auswechseln der Katalysatorcharge sehr zeit- und arbeitsaufwendig ist.

Es ist weiterhin aus der DE-PS 26 19 662 bekannt, daß durch thermische Dehydratisierung von alpha-Goethit erhaltenes $Fe_2O_3$ die $NO_x$-Reduktion katalysiert. Als Ausgangsmaterial eignet sich allerdings ausschließlich diese Oxidhydratmodifikation, andernfalls resultiert ein Eisenoxid von sehr geringer Aktivität. Der DE-PS 26 39 848 zufolge weist darüber hinaus aus Goethit erhaltener Hämatit nur dann eine ausreichende katalytische Wirksamkeit auf, wenn das Verhältnis der durch Beugung von Röntgenstrahlen an bestimmten Ebenen des Kristallgitters erhaltenen Reflexintensitäten einen definierten Wert überschreitet.

Die DE-PS 25 25 880 beschreibt einen porösen Katalysator zur Entfernung von Stickoxiden, bestehend aus Eisenoxid oder -sulfat als aktiver Komponente sowie einem $SiO_2$-$Al_2O_3$-Träger, dessen $SiO_2$-Gehalt mindestens 60% beträgt und dessen Porosität zu wenigstens 0.15 ml/g auf Poren vom Durchmesser >15 nm entfällt. Dieser Katalysator weist offensichtlich den Nachteil auf, daß der Träger unter exakt einzuhaltenden Bedingungen etwa aus $Al(SO_4)_3$-Lösung und $SiO_2$-Hydrogel durch Neutralisation mit $NH_3$ in aufwendiger Weise hergestellt werden muß.

Die DE-OS 27 48 471 beschreibt eine Katalysatormasse zur Anwendung bei der Dampfphasenreduktion von Stickoxiden mit Ammoniak, die Eisenoxid auf einem geformten Träger aus Ttandioxid und einem Tonmineral mit einer durchschnittlichen Teilchengröße von 0,1 bis 100 μm enthält. Das Tonmineral dient als Bindemittel für die Titandioxidteilchen und soll auf diese Weise die Druckfestigkeit des Katalysators verbessern. Eine katalytische Wirkung hat das Tonmineral nicht. Die katalytische Wirkung wird in erster Linie auf eine Wechselwirkung zwischen dem Eisenoxid und dem Titandioxid zurückgeführt.

Die DE-OS 2 504 027 beschreibt ein Verfahren zur selektiven Reduktion von Stickoxiden in Abgasen, die neben den Stickoxiden auch Schwefeloxide enthalten, in Gegenwart eines Eisensulfat auf einem Träger enthaltenden Katalysators, wobei Ammoniak als Reduktionsmittel verwendet wird. Die verwendeten Träger sind vorzugsweise feuerteste inerte Träger, wie Aluminiumoxid, Cordierit und Mullit, die mit dem Eisensulfat nicht in katalytische Wechselwirkung treten. Die Anwesenheit von Eisensulfat wird als wesentlich angesehen, da z.B. Eisennitrat unbrauchbare Katalysatoren liefert.

Gegenstand der älteren EP-A 0 211 224 ist die Verwendung eines Katalysators, der als wirksame Komponente ein säureaktiviertes Silicat mit Schichtstruktur enthält, dessen Schichtstruktur im wesentlichen noch erhalten ist, als Katalysator zur Verminderung des Stickoxidgehalts von Abgasen, insbesondere von Verbrennungsabgasen. Ein derartiger Katalysator, der u.a. durch Behandlung geeigneter schicht-silicathaltiger Ausgangsmaterialien mit wäßriger Mineralsäure erhalten werden kann, besitzt eine hohe Aktivität für die Reduktion von Stickoxiden mittels Ammoniak zu $H_2O$ und $N_2$.

Aus der FR-A 2 295 793 ist ferner ein eisenhaltiger Katalysator zur Verringerung des Stickoxidgehalts von Abgasen bekannt, bei dem die Eisenkomponente auf einen Aluminiumoxid- oder Alumosilicatträger aufgebracht ist. Auf den Träger werden mit Hilfe von wäßrigen Lösungen von Aluminiumsulfat, Schwefelsäure und Ammoniumsulfat und/oder Ammoniumsulfit Sulfat- und/oder Sulfitreste aufgebracht. Es fehlen Hinweise auf die Verwendung eines sauren Alumosilicats mit Schichtstruktur.

Aus der US-A 3 962 135 ist bekannt, zur Herstellung eines Katalysatorträgers eine mehrstufige Säureaktivierung von Montmorillonit mit zwischengeschalteten Calcinierstufen durchzuführen. Der Zweck dieser mehrfachen Säurebehandlung und Calcinierung besteht darin, den Porenradius auf mehr als 30 A zu erhöhen. Dies ist wichtig bei Reaktionen, bei denen die Gefahr einer Koksabscheidung sowie einer Verstopfung der Poren durch Metallverbindungen auftritt, z.B. beim Erdölcracken, beim Reformieren, Hydroformieren und bei der hydrierenden Entschwefelung. Dieses Problem stellt sich erfindungsgemäß nicht, da nur kleine Moleküle ($NO_x$ und $NH_3$) umgesetzt werden. Außerdem enthält der in der US-A 3 962 135 beschriebene Katalysator kein Eisen.

Als einzige Metallkomponente ist ausdrücklich nur ein Gemisch aus $MoO_3$ und $CoO$ genannt.

Ferner sind aus der DE-B-10 84 248 Katalysatoren auf der Basis von säurebehandeltem Bentonit bekannt, denen gegebenenfalls katalytisch wirksame Substanzen, wie Eisenoxid, zugesetzt sein können. Es fehlen Angaben über eine Wechselwirkung zwischen dem säurebehandelten Bentonit und dem Eisenoxid. Ferner werden die Katalysatoren zur Reformierung, Isomerisierung, Cyclisierung, Aromatisierung, Entschwefelung und Entfernung von Stickstoff eingesetzt, wobei es sich im letzteren Fall offenbar um die Entfernung von organisch gebundenem Stickstoff aus stickstoffhaltigen organischen Verbindungen handelt. Bei allen diesen Reaktionen werden die Katalysatoren in einer sauerstofffreien Atmosphäre eingesetzt.

Aufgabe der vorliegenden Erfindung war die Bereitstellung eines Katalysators, welcher einerseits eine hohe Wirksamkeit hinsichtlich der reduktiven Verringerung des Stickoxidgehalts von Abgasen, insbesondere von Verbrennungsabgasen aufweist, andererseits keinerlei die Umwelt gefährdende Bestandteile enthält und auf einfache Weise aus natürlichen, in großen Mengen verfügbaren und billigen Ausgangsstoffen herstellbar ist. Insbesondere sollte die Verwendung der teuren Katalysator-Komponente Titandioxid vermieden werden.

Diese Aufgabe kann überraschenderweise durch die Verwendung eines eisenhaltigen Katalysators gelöst werden, der als wirksame Komponente die Kombination einer zugesetzten Eisenverbindung mit einem sauren Alumosilicat mit Schichtstruktur enthält, wobei die Eisenverbindung mit dem Gitter des Schichtsilicats in chemische Wechselwirkung tritt und der weniger als 5% Titan enthält.

Zum gegenwärtigen Zeitpunkt kann zwar noch keine eindeutige mechanistische Erklärung für diese synergistische Wechselwirkung gegeben werden, doch scheint das Vorliegen der silicatischen Schichtstruktur eine notwendige Voraussetzung zu sein. Die sterischen und elektrostatischen Verhältnisse der Zwischenschichthöhlräume werden offenbar durch die Anwesenheit der eingebrachten Eisenverbindung in einer Weise modi-

EP 0 226 983 B2

fiziert, daß die Adsorption des $NH_3$ mit einer für den weiteren katalytischen Prozeß günstigen Bindungsstärke erfolgt. Verwendet man nämlich anstelle des sauren Schichtsilicats zur Umsetzung mit der Eisenverbindung entweder einen herkömmlichen $SiO_2$ $Al_2O_3$-Träger entsprechender BET-Oberfläche oder ein Schichtsilicat, dessen Kristallstruktur durch Hochtemperaturbehandlung zerstört wurde, so resultiert eine deutliche Abnahme der katalytischen Aktivität.

Entsprechendes gilt, wenn lediglich eine mechanische Mischung von Schichtsilicat und Eisenverbindung vorliegt, d.h. das Eisen keine chemische Bindung mit dem Gitter des Schichtsilicats eingegangen ist. In diesem Fall wird durch den Zusatz der Eisenverbindung die katalytische Aktivität des Schichtsilicats nicht erhöht.

Die hohe Ionenaustauschfähigkeit des erfindungsgemäß zur Herstellung der Aktivkomponente verwendeten Alumosilicats mit Schichtstruktur erlaubt darüber hinaus eine optimale Verteilung des Eisens in seinem Kristallgitter, so daß bereits sehr niedrige Eisenkonzentrationen zur Erzielung hoher katalytischer Wirksamkeit ausreichen. Überraschend ist die hohe katalytische Wirksamkeit auch deshalb, weil die erfindungsgemäß verwendeten Katalysatoren im Gegensatz zu handelsüblichen Katalysatoren kein Titan bzw. nur geringe Mengen (unter 5%, vorzugsweise unter 1%) enthalten.

Unter sauren Alumosilicaten mit Schichtstruktur versteht man zum Beispiel solche vom Smektit-Typ, insbesondere vom Montmorillonit-Typ. Neben den natürlichen sauren Alumosilicaten, wie den Fuller-Erden und den japanische sauren Tonen, werden vorzugsweise künstliche, durch Säurebehandlung von natürlichen neutralen Alumosilicaten mit Schichtstruktur erhaltene Produkte verwendet. Letztere können durch Behandlung eines neutralen schichtsilicathaltigen Ausgangsmaterials mit wäßrigen Säuren, insbesondere Mineralsäuren, unter Erniedrigung des Gehalts an Zwischenschicht-Kationen erhalten werden.

Die Säurebehandlung zur Überführung der neutralen schichtsilicathaltigen Ausgangsmaterialien in die "sauren" Alumosilicate kann in an sich bekannter Weise durchgeführt werden, wobei vorzugsweise wäßrige Mineralsäuren, wie Salzsäure oder Schwefelsäure, verwendet werden. Man kann aber auch organische Säuren, wie Ameisensäure und Essigsäure, verwenden. Die Säurekonzentration liegt im Bereich von 1 bis 60 Gew.-% bezogen auf den Trockensubstanzgehalt, vorzugsweise im Bereich von 10 bis 40 Gew.-%. Eine vorhergehende Naßklassierung des Rohmaterials kann sich als vorteilhaft erweisen.

Vorzugsweise beträgt das Atomverhältnis zwischen dem im sauren Alumosilicat enthaltenen Silicium und Eisen 0.07 bis 90, vorzugsweise 2 bis 50.

Das saure Alumosilicat ist vorzugsweise ein säureaktiviertes Dreischichtsilicat, dessen kristalline Schichtstruktur noch teilweise erhalten ist und dessen BET-Oberfläche um mindestens 15%, vorzugsweise um mindestens 50%, bezogen auf die BET-Oberfläche des Dreischichtsilicats vor der Säureaktivierung, erhöht ist, wobei das Dreischichtsilicat vor der Säureaktivierung ein Kationen-Austauschvermögen von $\geqq 30$ mVal/100 g hat.

Vorzugsweise ist die Konzentration der Zwischenschicht-Kationen durch die Säureaktivierung gegenüber der Konzentration der Zwischenschicht-Kationen im Dreischichtsilikat vor der Säureaktivierung um mindestens 12% erniedrigt und der $SiO_2$- Gehalt gegenüber dem des Ausgangsmaterials um mindestens 5%, vorzugsweise um mindestens 10%, erhöht.

Der Anteil des Porenvolumens, welcher auf Makroporen mit einem Durchmesser von > 80 nm entfällt, beträgt vorzugsweise mindestens 25%.

Als Ausgangsmaterial für die Eisenverbindung verwendet man einmal die Eisenoxide bzw. -sulfate selbst, zum anderen Stoffe, welche diese enthalten oder aber welche in Eisenoxide und/oder Eisensulfate mit Hilfe an sich bekannter Methoden überführbar sind. Als Beispiele seien genannt: metallisches Eisen, Eisenoxide wie z.B. $FeO$, $Fe_2O_3$, $Fe_3O_4$, Hydroxide bzw. Oxidhydrate wie z.B. $Fe(OH)_2$, $Fe(OH)_3$ und $FeO(OH)$ sowie Eisensalze wie z.B. die Halogenide, Carbonate, Nitrate und Sulfate. Als Ausgangsmaterial eignen sich, besonders im Hinblick auf niedrige Rohstoffkosten, vor allem auch Eisenerze, Schrott, Verarbeitungsrückstände der Metallindustrie sowie eisenhaltige, gebrauchte Katalysatormassen, wie sie z.B. für die Hochtemperaturkonvertierung von Kohlenmonoxid Verwendung finden.

Die Kombination der Eisenverbindung mit dem Schichtsilicat zur katalytisch wirksamen Masse erfolgt z.B. durch gründliches Vermischen des sauren Alumosilicats mit Schichtstruktur mit einem oder mehreren Oxiden und/oder Sulfaten des Eisens oder aber in diese überführbaren Verbindungen. Die Eisenverbindung kann in fester, flüssiger (z.B. Eisencarbonyle) oder gelöster Form verwendet werden. Wird die Eisenverbindung in fester Form verwendet, z.B. als Eisenoxid, so erfolgt im allgemeinen eine Kalzinierung, um chemische Bindungen zwischen der Eisenverbindung und dem Gitter des Schichtsilicats auszubilden.

Der erfindungsgemäß verwendete Katalysator kann weiterhin durch Tränken des sauren Alumosilicats mit der Lösung einer Eisenverbindung, z.B. eines Eisensalzes und/oder einer Komplexverbindung und anschließendes Kalzinieren erhalten werden. Beim Kalzinieren werden diese Ausgangsstoffe in die oxidische Form übergeführt. Die Eisenverbindungen können aber auch z.B. durch Behandlung mit Schwefelsäure oder Schwefeloxiden in die Sulfate übergeführt werden. Die vollständige oder teilweise Überführung in die Sulfate kann auch während der erfindungsgemäßen Anwendung des Katalysators unter der Einwirkung der in Verbren-

4

nungsabgasen üblicherweise vorhandenen Schwefeloxide erfolgen. Auch in diesem Fall werden chemische Bindungen zwischen den Eisenverbindungen und dem Gitter des Schichtsilicats ausgebildet.

Wird die zur Umsetzung mit dem Schichtsilicat verwendete Eisenverbindung, wie z.B. ein Hydroxid, durch Präzipitation erhalten, so kann die Fällung in Gegenwart der Suspension des sauren Alumosilicats aus der Lösung eines Eisensalzes erfolgen. Die hierbei gebildeten Fremdionen (z.B. Ammoniumionen und Sulfationen, wenn als Eisensalz Eisensulfat und als Fällungsmittel Ammoniak verwendet wurden) werden ausgewaschen, worauf der Niederschlag getrocknet und kalziniert wird.

Nach einer Variante dieser Herstellungsweise, die insbesondere bei stark eisenhaltigen Alumosilicaten mit Schichtstruktur anwendbar ist, kann die beim Aufschluß des Schichtsilicats anfallende eisenhaltige Aufschlußlösung als Quelle für die Eisenverbindung verwendet werden. Man führt also einen sauren Aufschluß durch und fällt aus der sauren Aufschlußlösung in Gegenwart des Schichtsilicats durch Neutralisation Eisenhydroxid aus. Der Niederschlag wird dann wiederum durch Auswaschen von Fremdionen befreit und kalziniert.

Die Herstellung des erfindungsgemäße verwendeten Katalysators kann weiterhin durch eine Ionenaustauschreaktion zwischen der Lösung einer Eisenverbindung und dem sauren Alumosilicat mit Schichtstruktur erfolgen. Dabei kann es sich als vorteilhaft erweisen, die vorhergehende Säurebehandlung so durchzuführen, daß die Konzentration an Zwischenschicht-Kationen nur graduell erniedrigt wird. Ferner kann die Ionenaustauschreaktion mit dem neutralen, schichtsilicathaltigen Ausgangsmaterial durchgeführt werden, worauf erst anschließend die Säurebehandlung vorgenommen wird.

Der erfindungsgemäß verwendete Katalysator liegt in der Regel als Vollmaterial vor, d.h. es wird kein inerter Träger verwendet. Der Katalysator liegt üblicherweise als Formkörper vor, insbesondere in Form von Kugeln, Tabletten, Strangpreßlingen, langgestreckten oder flachen Wabenkörpern (letztere werden als "Kanalgitter" bezeichnet). Stäben, Rohren, Ringen, Wagenrädern oder Sattelkörpern. Diese Formkörper können z.B. durch Tablettieren oder Strangpressen der Katalysatormasse erhalten werden, wobei gegebenenfalls Zusätze, die die Formbarkeit verbessern, beigemischt werden können. Derartige Zusätze sind beispielsweise Graphit oder Aluminiumstearat. Es können auch Zusätze, die die Oberflächenstruktur verbessern, beigemischt werden. Hierbei handelt es sich z.B. um organische Substanzen, die bei der anschließenden Kalzinierung unter Zurücklassung einer porösen Struktur verbrennen.

Die Verwendung von Zusätzen, die die Verformbarkeit verbessern, ist nicht unbedingt erforderlich, da das als Ausgangsmaterial verwendete Alumosilicat, auch wenn es in einer Verbindung mit der Eisenkomponente vorliegt, eine plastische Verformbarkeit besitzt. Es können aber noch neutrale Bentonite oder andere Bindemittel, wie Kaolin oder Zemente, zugesetzt werden. Die Formgebung erfolgt im allgemeinen unter Zusatz von Wasser oder organischen Lösungsmitteln, z.B. von ein- oder mehrwertigen Alkoholen, Polyethylenoxid oder verschiedenen Polysacchariden.

Der Formgebung unterliegt in der Regel die erfindungsgemäß verwendete Katalysatormasse, also die Kombination des sauren Schichtsilicats mit der Eisenverbindung; es ist jedoch auch möglich, das schichtsilicathaltige Ausgangsmaterial - vor oder nach der Säurebehandlung - zu verformen und erst dann die Umsetzung mit der Eisenkomponente durchzuführen.

Die erfindungsgemäße verwendeten Katalysatoren werden in der Regel nach erfolgter Formgebung getrocknet und bei Temperaturen von etwa 200 bis 700°C, vorzugsweise von 300 bis 550°C kalziniert.

Durch die Kalzinierung wird der Katalysator aktiviert und erreicht auf diese Weise seine vorteilhaften Eigenschaften, insbesondere wenn die vorstehend angegebenen Temperaturbereiche eingehalten werden.

Typische Arbeitsweisen bei der Herstellung der erfindungsgemäß verwendeten Katalysatoren sind in den Beispielen beschrieben.

Die erfindungsgemäßen verwendeten Katalysatoren werden vorzugsweise zur reduktiven Verringerung des Stickoxidgehalts von Verbrennungsabgasen, welche neben den üblichen Abgasbestandteilen auch Schwefeloxide ($SO_x$) enthalten, wobei als Reduktionsmittel $NH_3$ verwendet wird, eingesetzt.

Bei der Reduktion mit $NH_3$ wird der Stickoxidgehalt der Verbrennungsabgase dadurch verringert, daß sich $N_2$ und $H_2O$ bilden. Als Stickoxide ($NO_x$) werden die verschiedenen Sauerstofferbindungen des Stickstoffs bezeichnet, wie z.B. $NO$, $N_2O_3$, $NO_2$, $N_2O_5$; es handelt sich jedoch vorwiegend um $NO$ und $NO_2$, wobei $NO$ über-wiegt.

Die $NO_x$-Konzentration der zu reinigenden Abgase kann in weiten Grenzen variieren; sie liegt im allgemeinen im Bereich von 100 Vol-ppm bis 5 Vol.-%. Das molare Verhältnis $NH_3:NO_x$ beträgt im allgemeinen 0,3 bis 3, vorzugsweise 0,6 bis 1,5, und kann durch regelungstechnische Maßnahmen in der Weise eingestellt werden, daß maximale $NO_x$-Umsätze bei möglichst niedrigem $NH_3$-Schlupf erzielt werden. Das $NH_3$ kann sowohl gas-förmig als auch in Form einer wäßrigen Lösung eindosiert werden.

Für die Entstickungsreaktion eigenen sich prinzipiell sämtliche üblicherweise für heterogen katalysierte Gasphasenreaktionen verwendete Reaktoren, sofern die Konstruktionsmerkmale des Reaktors den Durchsatz entsprechend hoher Rauchgasvolumenströme gestatten. Zulässige Raumgeschwindigkeiten (RG) liegen im Bereich von 500 bis 20 000, vorzugsweise zwischen 1000 und 15 000 Liter Gas je h und Liter Katalysator, wobei diese Raumgeschwindigkeiten sich auf ein Gas bei 0°C und 1 bar beziehen. Die Raumgeschwindigkeit wird nachstehend der Einfachheit halber mit der Dimension $h^{-1}$ bezeichnet. Geeignete Reaktionstemperaturen liegen im Bereich von etwa 200 bis 600°C, vorzugsweise von 270 bis 430°C. Bei erheblich höheren Temperaturen kann eine Oxidation des Ammoniaks durch den im Abgas enthaltenen Sauerstoff stattfinden, wodurch der Ammoniak der Reaktion mit den Stickoxiden entzogen wird, so daß der Entstickungsgrad sinken kann.

Im folgenden werden typische beispiele für die Herstellung und Anwendung der erfindungsgemäß verwendeten Katalysatoren aufgeführt.

Die Wirksamkeit der Katalysatoren hinsichtlich der Beseitigung von Stickstoffoxiden aus Gasgemischen, welche u.a. auch Sauerstoff und Schwefeloxide enthalten, wird festgestellt durch Kontaktieren des Katalysators mit einem Gasstrom, welcher durch ein diesen Katalysator als Schüttgut enthaltendes, von außen elektrisch beheiztes Rohr geleitet wird. Das verwendete Gasgemisch hat folgende Zusammensetzung:

| | |
|---|---|
| $O_2$ | 3 Vol.-% |
| $H_2O$ | 10 Vol.-% |
| NO | 750 Vol.-ppm |
| $NO_2$ | 50 Vol.-ppm |
| $NH_3$ | 800 Vol.-ppm |
| $SO_2$ | 950 Vol.-ppm |
| $N_2$ | Differenz bezüglich 100 Vol.-% |

Die Konzentration der Komponenten NO und $NO_2$ im Gasgemisch wurde vor und nach dem Passieren der Katalysatorschüttgutschicht durch einen geeichten Analysator (Chemolumineszenzverfahren) kontinuierlich gemessen. Als Maß für die Wirksamkeit der Katalysatoren bezüglich der Reduktion der Stickoxide dient die Angabe der Umsatzgrade der Komponenten NO und $NO_2$ nach Einstellung des stationären Zustandes, definiert durch die folgenden Beziehungen:

$$NO\text{-}Umsatz \ (U_{NO}) = \frac{c_{NO}^E - c_{NO}^A}{c_{NO}^E} \cdot 100 \ (\%)$$

$$NO_2\text{-}Umsatz \ (U_{NO_2}) = \frac{c_{NO_2}^E - c_{NO_2}^A}{c_{NO_2}^E} \cdot 100 \ (\%)$$

Dabei bezeichnen die Symbole $c_{NO}$ und $c_{NO2}$ die Konzentrationen von NO und $NO_2$, wobei sich die Superskripte E und A auf den Zustand des Gasgemisches vor bzw. nach Passieren des Katalysators beziehen.

Beispiel 1

2 kg einer durch Hydroklassieren in wäßriger Suspension erhaltenen Rohbentonitfräktion mit der Korngröße > 50μm, einem Kationenaustauschvermögen von 79 mVal/100 g und einer BET-Oberfläche von 69 m²/g werden mit 8 l einer wäßrigen HCl-Lösung 6 Stunden bie 80° C gerührt. Der HCl-Gehalt beträgt ca. 21%, bezogen auf die Trockensubstanz. Man saugt ab und wäscht den Filterkuchen reichlich mit angesäuertem Wasser (pH = 3.5). Der erhaltene säureaktivierte Bentonit hat nach dem Trocknen eine BET-Oberfläche von 210 m²/g. Die Konzentration der Zwischenschicht-Kationen ist um 75% erniedrigt. 200 g des so erhaltenen Produkts werden in einer Kugelmühle 30 min mit 100 g frisch gefälltem $Fe(OH)_3$-Niederschlag vermahlen.

Die erhaltene Masse wird zu Strangpreßlingen vom Durchmesser 3 mm verformt, 12 h bei 120°C getrocknet und 4 h bei 450°C kalziniert.

Da der $Fe(OH)_3$-Niederschlag in einer sehr feinteiligen, reaktiven Form vorliegt, lagert sich das Eisen während der Kalzinierung offenbar in die Schichtstruktur säureaktivierten Bentonits ein.

Man unterzieht die auf eine Länge von 5 mm zerkleinerten Strangpreßlinge einem Wirksamkeitstest unter der beschriebenen Bedingungen (RG = 5000 $h^{-1}$).

6

| T (°C) | $U_{NO}$ (%) | $U_{NO2}$ (%) |
|--------|-------------|---------------|
| 300    | 93          | 100           |
| 350    | 96          | 100           |
| 400    | 92          | 100           |

Beispiel 2

Der nach Beispiel 1 erhaltene, säureaktivierte Bentonit wird 15 h bei 120°C getrocknet. Man verknetet 1 kg der Trockenmasse mit 550 ml $H_2O$ sowie 20 g Glycerin und führt sowohl Formgebung als auch Trocknung bzw. Kalzinierung wie in Beispiel 1 beschrieben durch.

200 g der auf diese Weise erhaltenen Strangpreßlinge werden 10 min bei 40°C in einer Lösung von 100 g $FeSO_4 \cdot 7 H_2O$ in 1 Liter $H_2O$ imprägniert, von der überschüssigen Lösung abgesaugt, getrocknet und erneut 4 h bei 450°C kalziniert. Die Analyse ergibt, daß durch die Imprägnierung 1% Eisen inkorporiert wurden.

Der Aktivitätstest ergibt die folgenden Ergebnisse (RG = 5000 h$^{-1}$);

| T (°C) | $U_{NO}$ (%) | $U_{NO2}$ (%) |
|--------|-------------|---------------|
| 300    | 91          | 100           |
| 350    | 97          | 100           |
| 400    | 95          | 100           |

Beispiel 3

Man präpariert einen Katalysator, wie im vorstehenden Beispiel beschrieben, verwendet aber zur Imprägnierung eine Lösung von 208 g $FeSO_4 \cdot 7 H_2O$ in 1 Liter $H_2O$. In diesem Fall beträgt die Menge des inkorporierten Eisens 2%

Man erhält die folgenden Testergebnisse (RG = 5000 h$^{-1}$):

| T (°C) | $U_{NO}$ (%) | $U_{NO2}$ (%) |
|--------|-------------|---------------|
| 300    | 93          | 100           |
| 350    | 98          | 100           |
| 400    | 95          | 100           |

Die Beispiele 2 und 3 zeigen, daß bereits sehr niedrige Fe-Konzentrationen zur Erzielung hoher Aktivitäten ausreichen.

Beispiel 4

200 g des nach Beispiel 1 erhaltenen säureaktivierten Bentonits werden 48 h bei Raumtemperatur in 2 Liter einer Lösung von 161 g $Fe(NO_3)_3$ in 2 Liter Wasser gerührt. Der pH-Wert wird durch Zugabe von $HNO_3$ auf 3 eingestellt. Man saugt ab, wäscht gründlich mit Wasser und trocknet über Nacht bei 120°C.

Formgebung und Behandlung werden wie in Beispiel 1 beschrieber durchgeführt. Der Eisengehalt des Katalysators beträgt 3.9%.

Der Aktivitätstest liefert die folgenden Ergebnisse (RG = 5000 h$^{-1}$):

| T (°C) | $U_{NO}$ (%) | $U_{NO2}$ (%) |
|--------|-------------|---------------|
| 300    | 87          | 100           |
| 350    | 94          | 100           |
| 400    | 91          | 100           |

Vergleichsbeispiel

Ein nichterfindungsgemäßer Katalysator wird hergestellt, wie in Beispiel 2 beschrieben; man verwendet allerdings an Stelle des säureaktivierten Bentonits einen $SiO_2$-$Al_2O_3$ (8:4) Träger. Die durch Imprägnierung aufgebrachte Fe-Menge beträgt in Analogie zu Beispiel 21%.

Die im Aktivitätstest erhaltenen $NO_x$-Umsätz sind signifikant niedriger als die bei Einsatz des erfindungsgemäßen Katalysators resultierenden (RG = 5000 $h^{-1}$).

| T (°C) | $U_{NO}$ (%) | $U_{NO2}$ (%) |
|---|---|---|
| 300 | 58 | 90 |
| 350 | 82 | 100 |
| 400 | 84 | 100 |

Auüßerdem erweist sich die nicht erfindungsgemäße Katalysatormasse als deutlich schlechter verformbar.

**Patentansprüche**

1. Verwendung eines eisenhaltigen Katalysators, der als wirksame Komponente die Kombination einer zugesetzten Eisenverbindung mit einem sauren Alumosilicat mit Schichtstruktur enthält, wobei die Eisenverbindung mit dem Gitter des Schichtsilicats in chemische Wechselwirkung tritt, und der weniger als 5% Titan enthält, zur reduktiven Verringerung des Stickoxidgehalts von Abgasen, insbesondere von Verbrennungsabgasen.

2. Verwendung nach Anspruch 1, dadurch gekennzeichnet, daß die Eisenverbindung in der Alumosilicat-Schichtstruktur eingelagert ist.

3. Verwendung nach Anspruch 1 oder 2, dadurch gekennzeichnet, daß das Eisen in Form eines oder mehrerer seiner Oxide, Silicate und/oder Sulfate vorliegt.

4. Verwendung nach einem der Ansprüche 1 bis 3, dadurch gekennzeichnet, daß ein saures Alumosilicat vom Smektit-, insbesondere vom Montmorillonit-Typ verwendet wird.

5. Verwendung nach einem der Ansprüche 1 bis 4, dadurch gekennzeichnet, daß das Atomverhältnis zwischen dem im sauren Alumosilicat enthaltenen Silicium und Eisen 0.07 bis 90, vorzugsweise 2 bis 50 beträgt.

6. Verwendung nach einem der Ansprüche 1 bis 5, dadurch gekennzeichnet, daß das saure Alumosilicat durch Behandlung eines schichtsilicathaltigen Ausgangsmaterials mit wäßriger Mineralsäure unter Erniedrigung des Gehalts an ZwischenschichtKationen erhalten worden ist.

7. Verwendung nach einem der Ansprüche 1 bis 6, dadurch gekennzeichnet, daß das saure Alumosilicat ein säureaktiviertes Dreischichtsilicat darstellt, dessen kristalline Schichtstruktur noch teilweise erhalten ist und dessen BET-Oberfläche um mindestens 15 %, vorzugsweise um mindestens 50 %, bezogen auf die BET-Oberfläche des Dreischschichtsilicats vor der Aktivierung erhöht ist, wobei das Dreischichtsilikat vor der Säureaktivierung ein Kationenaustauschvermögen von $\geqq$ 30 mVal/100 g besitzt.

8. Verwendung nach einem der Ansprüche 1 bis 7, dadurch gekennzeichnet, daß die Konzentration der Zwischenschicht-Kationen durch die Säureaktivierung gegenüber der Konzentration der Zwischenschicht-Kationen im Dreischichtsilicat vor der Säureaktivierung um mindestens 12 % erniedrigt ist.

9. Verwendung nach einem der Ansprüche 1 bis 8, dadurch gekennzeichnet, daß der $SiO_2$-Gehalt des säureaktivierten Dreischichtsilicats gegenüber dem des Ausgangsmaterials um mindestens 5 %, vorzugsweise um mindestens 10 %, erhöht ist.

10. Verwendung nach einem der Ansprüche 1 bis 9, dadurch gekennzeichnet, daß der Anteil des Porenvolumens, welcher auf Makroporen mit einem Durchmesser von > 80 nm entfällt, mindestens 25 % beträgt.

11. Verwendung nach einem der Ansprüche 1 bis 10, dadurch gekennzeichnet, daß der Katalysator als Formkörper, insbesondere in Form von Kugeln, Tabletten, Strangpreßlingen, langgestreckten oder flachen Wabenkörpern, Stäben, Rohren, Ringen, Wagenrädern oder Sattelkörpern vorliegt.

12. Verwendung nach Anspruch 11, dadurch gekennzeichnet, daß die Formkörper durch Tablettieren oder Strangpressen, gegebenenfalls unter Beimischung von die Verformbarkeit, die mechanische Festigkeit und-/oder die Oberflächenstruktur verbessernden Zusätzen, erhältlich sind.

13. Verwendung nach einem der Ansprüche 1 bis 12, dadurch gekennzeichnet, daß der Katalysator durch gründliches Vermischen eines sauren Alumosilicats mit Schichtstruktur mit einem oder mehreren Oxiden und-/oder Sulfaten des Eisens oder aber in diese überführbaren Verbindungen sowie anschließendes Calcinieren erhältlich ist.

14. Verwendung nach einem der Ansprüche 1 bis 13, dadurch gekennzeichnet, daß der Katalysator durch Tränken des sauren Alumosilicats mit der Lösung einer Eisenverbindung und anschließendes Calcinieren erhältlich ist.

15. Verwendung nach einem der Ansprüche 1 bis 14, dadurch gekennzeichnet, daß der Katalysator durch Fällung eines Eisenhydroxids in Gegenwart einer Suspension des sauren Alumosilicats mit Schichtstruktur, Auswaschen der Fremdinen und anschließendes Calcinieren erhältlich ist.

16. Verwendung nach einem der Ansprüche 1 bis 14, dadurch gekennzeichnet, daß der Katalysator durch Ionenaustauschreaktion zwischen der Lösung einer Eisenverbindung und dem sauren Alumosilicat mit Schichstruktur, welches noch eine ausreichende Konzentration an leicht austauschbaren Kationen aufweist, erhältlich ist.

17. Verwendung des Katalysators nach einem der Ansprüche 1 bis 16, dadurch gekennzeichnet, daß als Reduktionsmittel $NH_3$ eingesetzt wird.

18. Verwendung nach Anspruch 13 im Temperaturbereich von 200 bis 600°C, vorzugsweise von 250 bis 500°C, und bei einer Raumgeschwindigkeit im Bereich von 500 bis 20 000 Liter Verbrennungsabgas je Stunde und Liter Katalysator.

## Claims

1. The use of a ferruginous catalyst which contains as an active constituent the combination of an added compound of iron and of an acid aluminosilicate that has a layered structure, wherein the iron compound interacts chemically with the layer of the layered silicate, and which contains less than 5% titanium, for reductively decreasing the content of nitrogen oxides in flue gases, especially in combustion flue gases.

2. The use according to claim 1, characterized in that the iron compound is incorporated in the alumosilicate layered structure.

3. The use according to claims 1 or 2, characterized in that the iron is present in the form of one or several of its oxides, silicates and/or sulphates.

4. The use according to anyone of claims 1 to 3, characterized in that an acid alumosilicate of the smetic type and especially of the montmorillonite type is used.

5. The use according to anyone of claims 1 to 4, characterized in that the atomic ratio of the silicon in the acid alumosilicate to the iron ranges from 0.07 to 90 and preferably from 2 to 50.

6. The use according to anyone of claims 1 to 5, characterized in that the acid alumosilicate has been abtained by treating a layer-silicatej-containing starting material with aqueous mineral acid while decreasing the contents of intermediate-layer cations.

7. The use according to anyone of claims 1 to 6, characterized in that the acid alumosilicate is an acid-activated three-layer silicate that partly retains its cristaline layered structure and has a BET-surface that is increased by at least 15% and preferably by at least 50%, based on the BET-surface of the three-layer silicate before activation, the three-layer silicate having a cation-exchange capacity of $\leqq 39$ mval/100g before acid activation.

8. The use according to anyone of claims 1 to 7, characterized in that the concentration of intermediate-layer cations that results from acid activation is at least 12% lower than in the tree-layer silicate before acid activation.

9. The use according to anyone of claims 1 to 8, characterized in that the content of $SiO_2$ of the acid-activated three-layer silicate is at least 5 and preferably at least 10% higher than that of the starting material.

10. The use according to anyone of claims 1 to 9, charactezized in that the percentage of pore volume devoted to macropores with a diameter > 80 nm is at least 25%.

11. The use according to anyone of claims 1 to 10, characterized in that the catalyst is present in the form of molded shapes, especially balls, tablets, extruded shapes, elongated or flat honeycombs, rods, tubes, rings, wagon wheels, or saddles.

12. The use according to claim 11, characterized in that the shapedbodies are obtainable by tableting or extruding, optionally with admixture of additives improving the shapeability, the mechanical strength and/or the surface structure.

13. The use according to anyone of claims 1 to 12, charcterized in that it is obtainable by intimate mixing of an acid alumosilicate with layered structure, with one or several oxides and/or sulfates of iron, or compounds capable of being converted into these compounds, and subsequent calculation.

14. The use according to anyone of claims 1 to 13, characterized in that the catalyst is obtainable by impregnating the acid alumosilicate with the solution of an iron compound, and subsequent calcination.

15. The use according to anyone of claims 1 to 14, characterized in that the catalyst is obtainable by precipitation of an iron hydroxide in the presence of a suspension of the acid alumosilicate with layered structure, removing the foreign ions by washing, and subsequently calcination.

16. The use according to anyone of claims 1 to 14, characterized in that the catalyst is obtainable by an ion exchange reaction between the solution of an iron compound and the acid alumosilicate with layered structure which still has a sufficient concentration of exchangeable cations.

17. The use of the catalyst according to anyone of claims 1 to 16, characterized in that NH$_3$ is employed as reductant.

18. The use according to claim 13 within the temperature range of from 200 - 600°C, preferably from 250 - 500°C, at a space velocity within the range of from 500 - 20,000 1 of combustion flue gas per hour and litre of catalyst.


**Revendications**

1. Utilisation d'un catalyseur contenant du fer contenant comme composants actifs la combinaison d'un composé de fer avec un aluminosilicate acide à structure stratifiée, tandis que le composé de fer provoque une interaction chimique avec le réseau du silicate stratifié et qu'il contient moins de 5% de titane, pour diminuer, par réduction le taux d'oxydes d'azote des gaz résiduaires et, en particulier, des gaz de combustion.

2. Utilisation selon la revendication 1, caractérisé en ce que le composé de fer est inséré dans la structure stratifiée de l'aluminosilicate.

3. Utilisation selon la revendication 1 ou 2, caractérisé en ce que le fer se trouve sous forme d'un ou plusieurs de ses oxydes, silicates et/ou sulfates.

4. Utilisation selon l'une des revendications 1 à 3, caractérisé en ce que l'on utilise un aluminosilicate acide du type smectite et, en particulier, du type montmorillonite.

5. Utilisation selon l'une des revendications 1 à 4, caractérisé en ce que le rapport atomique entre le silicium contenu dans l'aluminosilicate acide et le fer est compris entre 0,07 et 90 et, de préférence, entre 2 et 50.

6. Utilisation selon l'une des revendications 1 à 5, caractérisé en ce que l'aluminosilicate acide est obtenu par traitement d'une manière première contenant un silicate stratifié par un solution aqueuse d'acide minéral, avec diminution de la teneur en cations de la couche intermédiaire.

7. Utilisation selon l'une des revendications 1 à 6, caractérisé en ce que l'aluminosilicate acide est un silicate à trois couches activé par l'acide, dont la structure cristalline stratifiée est encore partiellement conservée et dont la surface BET est augmentée d'au moins 15% et, de préférence, d'au moins 50% par rapport à la surface BET du silicate à trois couches avant l'activation, tandis que le silicate à trois couches présente, avant l'activation par l'acide, une capacité d'échange d'ions de $\geqq$ 30 mVAL/100g.

8. Utilisation selon l'une des revendications 1 à 7, caractérisé en ce que la concentration des cations de la couche intermédiaire est diminuée par l'activation par l'acide par rapport à la concentration des cations de la couche intermédiaire dans le silicate à trois couches avant l'activation par l'acide, à raison d'au moins 12%.

9. Utilisation selon l'une des revendications 1 à 8, caractérisé en ce que la teneur en SiO$_2$ du silicate à trois couches activé par l'acide est augmentée d'au moins 5% et, de préférence, d'au moins 10% par rapport à celle de la matière première.

10. Utilisation selon l'une des revendications 1 à 9, caractérisé en ce que la proportion de volume des pores, qui correspond à des macropores ayant un diamètre > 80 nm est d'au moins 25%.

11. Utilisation selon l'une des revendications 1 à 10, caractérisé en ce que le catalysateur se présente sous forme de pièces de forme et, en particulier, de billes, de tablettes, de pièces extrudées, de nids d'abeille allongés ou plats, de barres, de tubes, d'anneaux, de roues de voitures ou de corps en forme de selles.

12. Utilisation selon la revendication 11, caractérisé en ce que les pièces de forme peuvent être obtenues par pastillage ou extrusion, éventuellement avec addition de produits améliorant la capacité de mise en forme, la résistance mécanique et/ou la structure superficielle.

13. Utilisation selon l'une des revendications 1 à 12, caractérisé en ce que le catalysateur est obtenu en mélangeant intimement un aluminosilicate acide à structure stratifiée avec un ou plusieurs oxydes et/ou sulfates de fer ou de composés pouvant être transformé en ceuxci, puis en effectuant calcination.

14. Utilisation selon l'une des revendications 1 à 13, caractérisé en ce que le catalysateur est obtenu en imprégnant l'aluminosilicate acide par la solution de composé de fer et en calcinant ensuite.

15. Utilisation selon l'une des revendications 1 à 14, caractérisé en ce que le catalysateur est obtenu par précipitation d'un hydroxyde de fer en présence d'une suspension d'aluminosilicate acide à structure stratifiée, élimination des ions étrangers par lavage et calcination ultérieure.

16. Utilisation selon l'une des revendications 1 à 14, caractérisé en ce que le catalysateur est obtenu par une réaction d'échange d'ions entre la solution d'un composé de fer et l'aluminosilicate acide à structure stratifiée qui présente encore une concentration suffisante en cations facilement échangeables.

17. Utilisation du catalysateur selon l'une des revendications 1 à 16, charactérisé par l'utilisation de NH$_3$ comme agent réducteur.

18. Utilisation, selon la revendication 13, dans la gamme de température de 200 à 600°C et de préférence de 250 à 500°C et avec une vitesse volumique comprise dans la gamme de 500 à 20.000 litres de gaz de combustion par heure et par litre de catalyseur.